# EUROPÄISCHE PATENTSCHRIFT

(11) **EP 1 263 545 B1**
(45) Veröffentlichungstag und Bekanntmachung des Hinweises auf die Patenterteilung: **12.10.2005**
(21) Anmeldenummer: 00925133.1
(22) Anmeldetag: 23.03.2000
(51) Int. Cl.: B23K 26/08, B31D 1/02, G09F 3/10

(54) **VERFAHREN UND VORRICHTUNG ZUM FÜHREN EINES LASERSTRAHLS ÜBER EIN OBJEKT**
METHOD AND DEVICE FOR GUIDING A LASER BEAM OVER AN OBJECT
PROCEDE ET DISPOSITIF POUR GUIDER UN RAYON LASER SUR UN OBJET

(30) Priorität: 17.03.2000 DE 10013344
(43) Veröffentlichungstag der Anmeldung: 11.12.2002
(73) Patentinhaber: Horst Kind GmbH, 42277 Wuppertal (DE)
(72) Erfinder: PODUBRIN, Heinz, D-42283 Wuppertal (DE)
(74) Vertreter: Wenzel & Kalkoff
(86) Internationale Anmeldenummer: PCT/EP2000/002579
(87) Internationale Veröffentlichungsnummer: WO 2001/068310

(56) Entgegenhaltungen:
- WO-A-97/19217
- FR-A- 2 733 447
- US-A- 5 614 115
- US-A- 5 886 319

## Beschreibung

Die Erfindung bezieht sich auf ein Verfahren und eine Vorrichtung zum Führen eines Laserstrahls über ein Objekt einer Mehrzahl gleicher Objekte, die in einer Förderrichtung der Objekte im wesentlichen periodisch und mit variierender Anordnung relativ zu der Förderrichtung schrittweise an dem Laser vorbeigeführt werden und an übereinstimmenden Stellen von dem Laserstrahl getroffen werden sollen. Insbesondere bezieht sich die Erfindung auf eine Vorrichtung und ein Verfahren zum Ausschneiden von Etiketten aus einer streifenförmigen Textilie, wobei die Etiketten relativ zur Längs- bzw. Förderrichtung der Etiketten variierend angeordnet sind.

Etiketten für Textilien werden von Web-Unternehmen hergestellt und liegen üblicherweise als Textilstreifen vor, der in im wesentlichen regelmäßigen Abständen Etiketten aufweist, die Informationen über eine mit dem Etikett zu versehende Textilie enthalten, wie eine Waschanleitung, Materialangaben und Kleidergröße. Die Etikettenkennzeichnung kann entweder während des Web-Vorgangs durch Verwendung farblich abgesetzter Fäden oder durch Bedrucken des Textilstreifens vorgenommen werden.

Bei solchen Etiketten-Textilstreifen liegen die Etiketten in Längsrichtung des Textilstreifens nicht immer im selben Abstand zueinander. Darüber hinaus können die Etiketten Winkellagen gegenüber der Längsrichtung des Textilstreifens aufweisen. Es ist ebenfalls möglich, daß die Etiketten senkrecht zueinander zur Längsrichtung des Textilstreifens versetzt sind.

Es ist bekannt, die Etiketten tragenden Textilstreifen mittels einer Transportvorrichtung, die einen Schrittmotor aufweist, schrittweise an einer Laser-Schneideinrichtung vorbeizuführen, wobei jedes Etikett für den Schneidvorgang im Laser-Arbeitsbereich für einen geeigneten Zeitraum verweilt. Bevor die Etiketten aus dem Textilstreifen ausgeschnitten werden, muß jedoch zunächst festgelegt werden, welcher Ausschnitt aus dem Textilstreifen, der das Etikett umfaßt, von dem Laser herausgeschnitten werden soll.

Zu diesem Zweck wird bisher mit einer Schere ein Etikett per Hand von dem Textilstreifen abgeschnitten. Mittels eines Scanners wird ein Bild des Etiketts erzeugt und auf einer Anzeigevorrichtung dargestellt. Die Anzeigevorrichtung ist mit einem herkömmlichen Computer verbunden, der beispielsweise eine Cursorsteuerung aufweist. Der mit einer Maus bewegliche Cursor wird verwendet, um in dem Bild des per Hand ausgeschnittenen Etiketts eine Markierung vorzunehmen, entlang der während des Schneidvorgangs der Laser schneiden soll. Das mit der Markierung versehene Bild des als Referenz-Objekt zu bezeichnenden, per Hand ausgeschnittenen Etiketts wird auf einer handelsüblichen Diskette gespeichert. Eine Ablaufsteuerung für die Schneidvorgänge des Lasers greift auf die Informationen auf der Diskette zu, so daß schrittweise an dem Laser vorbeigeführte Etiketten jeweils übereinstimmend mit dem Laser ausgeschnitten werden.

Dieses Verfahren zum Ausschneiden von Etiketten aus einem Textilstreifen hat jedoch den Nachteil, daß bei übereinstimmendem Vorschub des Textilstreifens zwischen zwei Schneidvorgängen variierende Abstände zwischen zwei benachbarten Etiketten nicht berücksichtigt werden, so daß Textilstücke aus dem Textilstreifen ausgeschnitten werden können, die lediglich einen Teil des Etiketts enthalten. Zur Abhilfe ist vorgesehen worden, die Textilstreifen mit einer Farbmarke zu versehen, die in einem übereinstimmenden Abstand in Förderrichtung des Textilstreifens vor dem Etikett angeordnet ist. Mittels eines Farbmarkenlesers wird festgestellt, ob ein Etikett an geeigneter Position für den Laser-Schneidvorgang liegt. Diese Vorgehensweise hat jedoch den Nachteil, daß Lageänderungen zwischen den Etiketten bezüglich der Winkellage der Etiketten und eines zur Förderrichtung der Etiketten senkrechten Versatzes nicht Rechnung getragen wird.

Die anhand des Beispiels des Herausschneidens von Etiketten aus einem Textilstreifen beschriebene Problematik ergibt sich grundsätzlich bei sämtlichen Verfahren und Vorrichtungen, bei denen ein Laserstrahl über ein Objekt einer Mehrzahl gleicher Objekte, die nacheinander einen Laserstrahl-Arbeitsbereich passieren. Auch bei der Laserbeschriftung kann die Problematik auftreten.

Der Erfindung liegt somit die Aufgabe zugrunde, ein Verfahren und eine Vorrichtung der eingangs genannten Art derart weiterzuentwickeln, daß bei jedem der Objekte der Laserstrahl im wesentlichen über dieselben Stellen des Objektes geführt wird.

Diese Aufgabe wird gelöst durch ein Verfahren zum Führen eines Laserstrahls über ein Objekt einer Mehrzahl gleicher Objekte, die in einer Förderrichtung der Objekte im wesentlichen periodisch und mit variierender Anordnung relativ zu der Förderrichtung schrittweise an dem Laser vorbeigeführt werden und an übereinstimmenden Stellen von dem Laserstrahl getroffen werden sollen, wobei das Verfahren die Schritte aufweist:
a) Anordnen eines Referenz-Objektes in der Bildebene einer optischen Kamera;
b) Aufnehmen eines Bildes des Referenz-Objektes durch die Kamera und Darstellen des Bildes auf einer Anzeigevorrichtung;
c) Markieren eines Punktes oder einer Linie, die von dem Laserstrahl getroffen werden soll, auf dem Bild;
d) Ablegen der Referenz-Objekt-Positionsdaten und der Markierungs-Positionsdaten in einem ersten Speicher;
e) Anordnen eines weiteren Objektes in der Bildebene der Kamera;
f) Aufnehmen eines Bildes des weiteren Objektes mit der Kamera;
g) Ablegen der Objekt-Positionsdaten des weiteren Objektes in einem zweiten Speicher,
h) Berechnen der Abweichung zwischen den Referenz-Objekt-Positionsdaten in dem ersten Speicher und den Objekt-Positionsdaten des weiteren Objektes in dem zweiten Speicher;
j) Berechnen der Laserposition(en) relativ zu dem weiteren Objekt aufgrund der Abweichung so, daß der Laser das weitere Objekt an den in Schritt c) markierten Positionen trifft; und
k) Führen des Lasers über das weitere Objekt auf die/entlang der in Schritt j) berechneten Laserposition(en).

Gemäß dem Verfahren ist somit vorgesehen, zunächst ein Bild eines Referenzobjektes aufzunehmen und auf diesem Bild eine Markierung der Stellen eines Objektes, beispielsweise Punkte oder Linien, zu markieren, die von dem Laserstrahl getroffen werden sollen. Zur Aufnahme des Referenzbildes mittels der optischen Kamera entfällt das bisher erforderliche Ausschneiden eines Referenzetikettes per Hand, das durch einen Scanner abgetastet werden muß. Das Objekt bzw. das Etikett, das als Referenz dient, kann an dem Textilstreifen verbleiben, so daß der Textilstreifen insgesamt sofort zur Durchführung wiederholter Schneidvorgänge auf eine Transportvorrichtung gebracht werden kann.

Nachdem die Positionsdaten des Referenz-Etiketts und der Markierung gespeichert sind, kann eine gewünschte Anzahl von Etiketten mit dem Laser ausgeschnitten werden. Vor jedem Schneidvorgang wird zunächst ein Videobild des aktuellen Objektes mittels der Kamera aufgenommen und Ortsabweichungen zwischen dem aktuellen Objekt und dem Referenzobjekt berechnet. Diese berechneten Abweichungen werden zur Steuerung des Lasers verwendet.

Für das Beispiel des Herausschneidens von Etiketten aus einem Textilstreifen ergibt sich gegenüber dem Stand der Technik der Vorteil, daß der Etiketten-Ausschuß in Folge fehlerhaften Ausschneidens der Etiketten, so daß ein Teil der Kennzeichnung verlorengeht, um etwa 10 bis 20 % verringert wird. Ähnliche Vorteile ergeben sich bei anderen Verfahren, bei denen ein Laserstrahl über eine Mehrzahl von Objekten zu führen ist. Dies gilt insbesondere für jegliche Objekte, die auf einem Transportband befördert werden, über dem ein Laser zu Schneid- oder anderen Zwecken angeordnet ist.

Zur Wiederholung eines Laser-Führvorgangs werden die Verfahrensschritte e) - k) wiederholt ausgeführt.

Sofern die Objekte Etiketten auf einem Textilstreifen sind, kann der Textilstreifen von einem Schrittmotor, gesteuert von einer Schrittmotorsteuerung, angetrieben werden. Der Schrittmotor bewirkt, daß die Etiketten nacheinander in den Arbeitsbereich des Lasers, der in dem von der Kamera beobachteten Raumwinkel liegt, geführt werden. Abhängig von den Ergebnissen der Berechnung der Positionsabweichungen zwischen Referenz-Etikett und aktuellem Etikett schneidet der Laser, der von einer Lasersteuerung gesteuert wird, aus dem Textilstreifen das aktuelle Etikett heraus.

Bei jedem Schritt e) kann durch ein Signal der Lasersteuerung, das die Beendigung des Schrittes k) wiedergibt, die Schrittmotorsteuerung ausgelöst werden, so daß der Schrittmotor den Textilstreifen für einen vorbestimmten Vorschub, beispielsweise 10 cm, antreibt, so daß das jeweils folgende Etikett im Laser-Arbeitsbereich liegen sollte. Der Kamera-Raumwinkel sollte so bemessen sein, daß er übliche Abweichungen der Etiketten von einer Raumwinkel-Mittellage umfaßt. Es ist jedoch nicht völlig auszuschließen, daß Etiketten nur teilweise innerhalb des Raumwinkels der Kamera liegen. In diesem Fall kann die Durchführung des Verfahrens gestoppt und eine Fehlermeldung aufgegeben werden.

Jeder Schritt f) kann durch ein Signal der Schrittmotorsteuerung, das die Beendigung des Schrittes e) wiedergibt, an eine Kamerasteuerung ausgelöst werden. Dies hat zur Folge, daß das Bild des aktuellen Etiketts aufgenommen wird, sobald das Etikett eine Ruhelage erreicht hat.

Gegenstand der Erfindung ist außerdem eine Vorrichtung zum Führen eines Laserstrahls über ein Objekt einer Mehrzahl gleicher Objekte, die in einer Förderrichtung der Objekte im wesentlichen periodisch und mit variierender Anordnung relativ zu der Förderrichtung schrittweise an dem Laser vorbeigeführt werden und an übereinstimmenden Stellen von dem Laserstrahl getroffen werden sollen, mit:
- einer Transportvorrichtung zum Führen der Objekte in den Laser-Arbeitsbereich,
- einer Kamera, deren Raumwinkel den Laser-Arbeitsbereich umfaßt,
- einem Speicher zum Speichern von von der Kamera ausgelesenen Bildern,
- einer Anzeigevorrichtung zum Anzeigen der Objekt-Bilder der Kamera,
- einer Markierungseinrichtung zum Markieren eines Punktes oder einer Linie, die von dem Laserstrahl getroffen werden soll, auf einem Objekt-Bild,
- einer Recheneinheit zum Berechnen von Abweichungen zwischen verschiedenen Objekt-Bildern der Kamera und
- einer Steuereinheit zum Ansteuern des Lasers aufgrund der Ergebnisse der Recheneinheit.

Die Erfindung wird nachfolgend anhand eines Ausführungsbeispiels noch näher beschrieben.

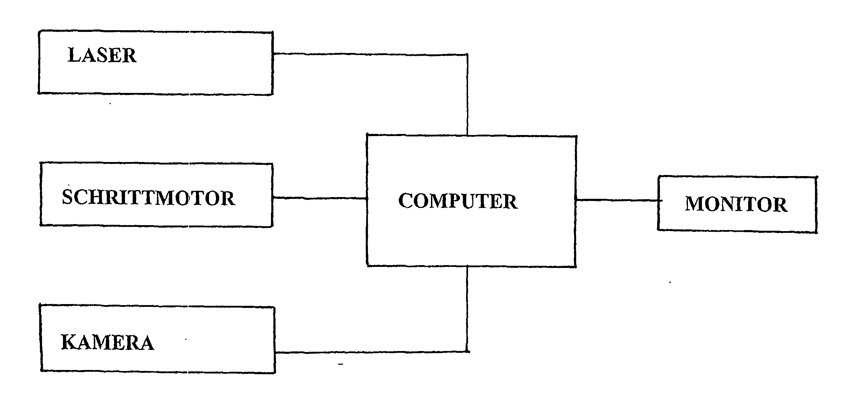

Die einzige Fig. zeigt ein Übersichtsschema einer Vorrichtung zum Führen eines Laserstrahls über eine Mehrzahl gleicher Objekte.

Die Vorrichtung weist einen Laser 1, einen Schrittmotor 2 und eine CCD-Kamera 3 auf, die sämtlich über einen Computer 4 als Ablaufsteuerung gesteuert werden. Der Computer 4 ist mit einem Monitor 5 verbunden.

Ein mit der Kamera 3 aufgenommenes Videobild eines Objektes wird von dem Computer 4 ausgelesen und auf dem Monitor 5 angezeigt. Beispielsweise kann der Computer 4 mit einer Maus ausgestattet sein, deren Position als Cursor auf dem Monitor dargestellt ist. Durch Betätigen der Maus kann in dem auf dem Monitor 5 dargestellten Videobild eine Markierung vorgenommen werden. Ein mit der Markierung versehenes Referenz-Bild eines Objektes wird in einem Speicherabschnitt des Computers 4 gespeichert.

Nachdem dieser Vorgang abgeschlossen ist, wird beim Einsatz der Vorrichtung zum Schneiden von Etiketten aus einem Textilstreifen der kontinuierliche Betrieb ausgelöst. Zunächst sendet der Computer 4 ein Signal an den Schrittmotor 2, so daß das nächste Etikett, d.h. das Etikett, das dem Referenz-Etikett folgt, in den Raumwinkel der Kamera 4 gelangt. Nachdem das nächste Etikett eine Ruhelage eingenommen hat, sendet der Schrittmotor 2 ein Signal an den Computer 4, das die Beendigung des Vorschubschrittes für das Etikett wiedergibt. Daraufhin steuert der Computer 4 die Kamera 3 an, so daß ein Bild des im Raumwinkel der Kamera befindlichen Objektes aufgenommen wird. Das Kamerabild wird von dem Computer ausgelesen und gespeichert. Anschließend werden von dem Computer 4 Lageabweichungen des Referenz-Etiketts von dem soeben aufgenommenen Etikett berechnet. Zu diesen Abweichungen gehören Winkelabweichungen relativ zu der Längsrichtung des Textilstreifens, seitlicher Versatz senkrecht zur Längsrichtung des Textilstreifens und Versatz in Richtung des Textilstreifens. Die durch die Berechnung gewonnenen Daten werden verwendet, um zu berechnen, an welchen Positionen die bei dem Referenz-Bild festgelegten Markierungen in dem Bild des aktuellen Etiketts liegen.

Die berechneten Positionen der Markierungen in dem aktuellen Bild werden von dem Computer 4 zur Steuerung der Position des Lasers 1 verwendet. Anschließend findet der Schnittvorgang durch den Laser 1 statt. Sobald der Schnittvorgang des Lasers 1 beendet ist, sendet der Laser 1 ein Signal an den Computer 4 aus, das die Beendigung des Schnittvorgangs wiedergibt. Dieses Signal löst mittels des Computers 4 eine weitere Betätigung des Schrittmotors 2 aus. Der weitere Ablauf des Verfahrens wiederholt sich in gewünschter Anzahl.

Zur Vorbereitung der Laser-Schnittvorgänge können anfangs in den Computer 4 Daten über den zu erwartenden Abstand zwischen zwei Etiketten auf dem Textilstreifen eingegeben werden, so daß der Schrittmotor 2 geeignete Vorgaben für einen Vorschub erhält. Des weiteren können ebenfalls Daten über die benötigte Anzahl von Etiketten in den Computer 4 eingegeben werden.

Zur Durchführung der Berechnungen enthält der Computer 4 eine Bildverarbeitungssoftware, die zur Berechnung der Abweichungen in den Positions-Daten zwischen einem Referenz-Etikett und einem aktuellen Etikett dienen.

## Patentansprüche

1. Verfahren zum Führen eines Laserstrahls über ein Objekt einer Mehrzahl gleicher Objekte, die in einer Förderrichtung der Objekte im wesentlichen periodisch und mit variierender Anordnung relativ zu der Förderrichtung schrittweise an dem Laser vorbeigeführt werden und an übereinstimmenden Stellen von dem Laserstrahl getroffen werden sollen, wobei das Verfahren die Schritte aufweist:
a) Anordnen eines Referenz-Objektes in der Bildebene einer optischen Kamera;
b) Aufnehmen eines Bildes des Referenz-Objektes durch die Kamera und Darstellen des Bildes auf einer Anzeigevorrichtung;
c) Markieren eines Punktes oder einer Linie, die von dem Laserstrahl getroffen werden soll, auf dem Bild;
d) Ablegen der Referenz-Objekt-Positionsdaten und der Markierungs-Positionsdaten in einem ersten Speicher;
e) Anordnen eines weiteren Objektes in der Bildebene der Kamera;
f) Aufnehmen eines Bildes des weiteren Objektes mit der Kamera;
g) Ablegen der Objekt-Positionsdaten des weiteren Objektes in einem zweiten Speicher,
h) Berechnen der Abweichung zwischen den Referenz-Objekt-Positionsdaten in dem ersten Speicher und den Objekt-Positionsdaten des weiteren Objektes in dem zweiten Speicher;
j) Berechnen der Laserposition(en) relativ zu dem'weiteren Objekt aufgrund der Abweichung so, daß der Laser das weitere Objekt an den in Schritt c) markierten Positionen trifft; und
k) Führen des Lasers über das weitere Objekt auf die/entlang der in Schritt j) berechneten Laserposition(en).

2. Verfahren nach Anspruch 1, bei dem die Verfahrensschritte e) bis k) wiederholt ausgeführt werden.

3. Verfahren nach Anspruch 1 oder 2, bei dem die Objekte Textil-Etiketten sind, die in einem Textiletreifen vorgesehen sind.

4. Verfahren nach Anspruch 3, bei dem der Textilstreifen von einem Schrittmotor, gesteuert von einer Schrittmotorsteuerung, angetrieben wird, und die Etiketten von dem Laser, gesteuert von einer Lasersteuerung, aus dem Textilstreifen herausgeschnitten werden.

5. Verfahren nach Anspruch 4, bei dem jeder Schritt e) durch ein Signal der Lasersteuerung, das die Beendigung des Schrittes k) wiedergibt, an die Schrittmotorsteuerung ausgelöst wird.

6. Verfahren nach Anspruch 5, bei dem jeder Schritt f) durch ein Signal der Schrittmotorsteuerung, das die Beendigung des Schrittes e) wiedergibt, an eine Kamerasteuerung ausgelöst wird.

7. Vorrichtung zum Führen eines Laserstrahls über ein Objekt einer Mehrzahl gleicher Objekte, die in einer Förderrichtung der Objekte im wesentlichen periodisch und mit variierender Anordnung relativ zu der Förderrichtung schrittweise an dem Laser vorbeigeführt werden und an übereinstimmenden Stellen von dem Laserstrahl getroffen werden sollen, mit:
- einer Transportvorrichtung zum Führen der Objekte in den Laser-Arbeitsbereich,
- einer Kamera, deren Raumwinkel den Laser-Arbeitsbereich umfaßt,
- einem Speicher zum Speichern von von der Kamera ausgelesenen Bildern,
- einer Anzeigevorrichtung zum Anzeigen der Objekt-Bilder der Kamera,
- einer Markierungseinrichtung zum Markieren eines Punktes oder einer Linie, die von dem Laserstrahl getroffen werden soll, auf einem Objekt-Bild,
- einer Recheneinheit zum Berechnen von Abweichungen zwischen verschiedenen Objekt-Bildern der Kamera und
- einer Steuereinheit zum Ansteuern des Lasers aufgrund der Ergebnisse der Recheneinheit.

## Claims

1. A method of guiding a laser beam over an object from a plurality of identical objects, which are guided past the laser step by step in a conveying direction of the objects, substantially periodically and with a varying arrangement relative to the conveying direction, and are to be struck by the laser beam at coincident locations, the method comprising the following steps:
a) arranging a reference object in the image plane of an optical camera;
b) recording an image of the reference object by means of the camera and displaying the image on a display device;
c) marking a point or a line which is to be struck by the laser beam on the image;
d) storing the reference object position data and the mark position data in a first memory;
e) arranging a further object in the image plane of the camera;
f) recording an image of the further object with the camera;
g) storing the object position data of the further object in a second memory;
h) calculating the deviation between the reference object position data in the first memory and the object position data of the further object in the second memory;
j) calculating the laser position(s) relative to the further object on the basis of the deviation in such a way that the laser strikes the further object at the positions marked in step c); and
k) guiding the laser over the further object to the/along the laser poaition(s) calculated in step j).

2. The method as claimed in claim 1, in which method steps e) to k) are carried out repeatedly.

3. The method as claimed in claim 1 or 2, in which the objects are textile labels which are provided in a textile strip.

4. The method as claimed in claim 3, in which the textile strip is driven by a stepping motor, controlled by a stepping motor control system, and the labels are cut out of the textile strip by the laser, controlled by a laser control system.

5. The method as claimed in claim 4, in which each step e) is triggered by a signal from the laser control system, which reproduces the completion of the step k), to the stepping motor control system.

6. The method as claimed in claim 5, in which each step f) is triggered by a signal from the stepping motor control system, which reproduces the completion of step e), to a camera control system.

7. An apparatus for guiding a laser beam over an object from a plurality of identical objects, which are guided past the laser step by step in a conveying direction of the objects, substantially periodically and with a varying arrangement relative to the conveying direction, and are to be struck by the laser beam at coincident points, comprising:
- a transport device for guiding the objects into the laser operating region,
- a camera whose spatial angle covers the laser operating region,
- a memory for storing images read out by the camera,
- a display device for displaying the object images from the camera,
- a marking device for marking a point or a line which is to be struck by the laser beam on an object image,
- a computing unit for calculating deviations between various object images from the camera and
- a control unit for driving the laser on the basis of the results from the computing unit.

## Revendications

1. Procédé pour guider un rayon laser sur un objet d'une multitude d'objets pareils qui sont guidés progressivement devant un laser dans un sens de transport des objets de manière substantiellement périodique et avec un arrangement qui varie par rapport au sens de transport et qui doivent être atteints par le rayon laser à des endroits qui coïncident, le procédé présentant les étapes :
a) placement d'un objet de référence dans le plan de l'image d'une caméra optique ;
b) prise d'une image de l'objet de référence par la caméra et représentation de l'image sur un dispositif d'affichage ;
c) marquage d'un point ou d'une ligne qui doit être touché par le rayon laser sur l'image ;
d) entrée des données de position de l'objet de référence et des données de position de marquage dans une première mémoire ;
e) placement d'un autre objet dans le plan de l'image de la caméra ;
f) prise d'une image de l'autre objet avec la caméra ;
g) entrée des données de position de l'objet de l'autre objet dans une seconde mémoire ;
h) calcul de l'écart entre les données de position de l'objet de référence dans la première mémoire et les données de position de l'objet de l'autre objet dans la seconde mémoire ;
j) calcul de la(des) position (s) laser par rapport à l'autre objet en raison de l'écart de telle manière que le laser touche l'autre objet aux positions marquées dans l'étape c) et
k) guidage du laser sur l'autre objet sur la/le long de la position (des) position(s) laser calculées à l'étape j).

2. Procédé selon la revendication 1 pour lequel les étapes de procédé e) à k) sont réalisées de manière répétée.

3. Procédé selon la revendication 1 ou 2 pour lequel les objets sont des étiquettes textiles qui sont prévues dans une bande textile.

4. Procédé selon la revendication 3 pour lequel la bande textile est entraînée par un moteur pas à pas, commandé par une commande pas à pas, et les étiquettes sont découpées de la bande textile par le laser, commandé par une commande de laser.

5. Procédé selon la revendication 4 pour lequel chaque étape e) est déclenchée par un signal de la commande de laser qui reproduit l'achèvement de l'étape k) à la commande de moteur pas à pas.

6. Procédé selon la revendication 5 pour lequel chaque étape f) est déclenchée par un signal de la commande du moteur pas à pas qui reproduit l'achèvement de l'étape e) à une commande caméra.

7. Dispositif pour guider un rayon laser sur un objet d'une multitude d'objets pareils qui sont guidés progressivement devant un laser dans un sens de transport des objets de manière substantiellemnt périodique et avec un arrangement qui varie par rapport au sens de transport et qui doivent être atteints par le rayon laser à des endroits qui coïncident, avec :
- un dispositif de transport pour guider les objets dans la zone de travail du laser,
- une caméra dont l'angle solide comprend la zone de travail du laser,
- une mémoire pour mettre en mémoire des images extraites de la caméra,
- un dispositif d'affichage pour afficher les images d'objet de la caméra,
- un dispositif de marquage pour marquer un point ou une ligne qui doit être touchée par le rayon laser sur une image d'objet,
- une unité de calcul pour calculer des écarts entre différentes images d'objets de la caméra et
- une unité de commande pour exciter le laser en raison des résultats de l'unité de calcul.
